# EUROPÄISCHE PATENTSCHRIFT

(11) **EP 0 625 493 B1**
(45) Veröffentlichungstag und Bekanntmachung des Hinweises auf die Patenterteilung: **09.10.1996**
(21) Anmeldenummer: 94106173.1
(22) Anmeldetag: 21.04.1994
(51) Int. Cl.: C04B 41/45, C04B 41/63, B27K 3/15

(54) **Verfahren zum Tränken poröser Körper**
Process for impregnating porous bodies
Procédé pour imprégner des corps poreux

(30) Priorität: 19.05.1993 DE 4316832
(43) Veröffentlichungstag der Anmeldung: 23.11.1994
(73) Patentinhaber: IBACH Steinkonservierungen GmbH & Co. KG, D-96120 Bischberg (DE)
(72) Erfinder: Sinner, Paulus, D-96166 Kirchlauter (DE); Ibach, Hermann Wolf, D-96120 Bischberg (DE)
(74) Vertreter: Cohausz & Florack Patentanwälte

(56) Entgegenhaltungen:
- EP-A- 0 192 038
- EP-A- 0 220 448
- DE-A- 2 254 146
- DE-A- 3 012 099
- DE-A- 3 205 440
- CHEMICAL ABSTRACTS, vol. 76, no. 22, 29. Mai 1972, Columbus, Ohio, US; abstract no. 128028b, Seite 41

## Beschreibung

Die Erfindung betrifft ein Verfahren zum Tränken, insbesondere vollständigen Tränken, poröser Körper mit einer aushärtbaren Flüssigkeit, insbesondere Methylmethacrylat.

Die Volltränkung von porösen Stoffen, die Polymerisation und das Abdampfen an der Oberfläche zur Vermeidung eines speckigen Aussehens sind aud den DE-A 3012099, 3505427 und 3534062 bekannt.

Die Anforderungen an das Verfahren wurden jedoch ständig gesteigert. So war eine Problemlösung zu finden für sehr morbide Oberflächen einerseits und stark unterschiedlich verwitterte Oberflächen am gleichen Objekt andererseits. Solche Problemobjekte konnten nicht allein bezüglich ihrer Abdampfrate über den Polymerisationsverlauf gesteuert werden. Es mußte daher ein Weg gefunden werden, die Oberflächen gezielt aufzubereiten, um am gesamten Objekt eine einheitliche und optimale (Aussehen und Festigkeit) Oberfläche zu erzielen.

Aus der DE-A 2254146 ist es bekannt, daß durch eine gezielte Verzögerung im Einsetzen der Polymerisation ein Abdampfen in der Oberfläche möglich ist. Die Anforderungen der Oberflächen in der Praxis sind jedoch so unterschiedlich, daß ein gleichmäßiges und definiertes Abdampfen mit den bekannten Systemen nicht zu erreichen ist.

Zusätzlich hatte sich herausgestellt, daß es für die Qualität der Konservierung vorteilhaft ist, einen schonenderen (langsameren) Polymerisationsablauf zu wählen. Da durch diese Verzögerung im Aushärteprozeß die Abdampfrate in eine Größenordnung stieg, die nicht mehr zu vertreten war, mußte auch für dieses Problem eine Lösung gefunden werden.

Aufgabe der Erfindung ist es, ein Verfahren der eingangs genannten Art so zu verbessern, daß das Abdampfen der Tränkflüssigkeit ausreichend langsam und definiert gleichmäßig bezüglich der Abdampftiefe erfolgt.

Diese Aufgabe wird erfindungsgemäß dadurch gelöst, daß nach dem Tränken und vor dem Polymerisieren auf die Oberfläche des Körpers ein Glutinleim aufgebracht wird, der nach der Polymerisation der Tränkflüssigkeit entfernt wird.

Diese auf die Körperaußenseite aufgetragenen Schutzschicht erreicht:
1. einen Ausgleich der unterschiedlichen Permeabilitäten am Objekt und an den Objekten durch gezielte Anpassung der Beschichtungsdicke, je nach Permeabilität der entsprechenden Stelle
2. eine optimale Abdampfrate auch bei längerer Abdampfzeit aufgrund einer langsameren Polymerisation
3. eine hohe Beständigkeit gegenüber den bei der Polymerisation auftretenden Temperaturen
4. eine Beständigkeit gegenüber der Tränkflüssigkeit
5. eine leichte Entfernbarkeit nach dem Konservierungsprozeß.

Besonders vorteilhaft ist es, wenn der Glutinleim in eine spritzfähige Konsistenz gebracht und aufgespritzt oder aufgesprüht wird. Hierbei sollte zum Herstellen einer spritzfähigen Konsistenz 1 Teil Glutinleimgranulat in 3 bis 4 Teile Wasser aufgelöst werden. Auch wird vorgeschlagen, daß zum vollständigen Auflösen das Glutinleimgranulat ca. 1 Stunde in ca. 50 Grad Celsius warmes Wasser gerührt wird.

Ausführungsbeispiele des erfindungsgemäßen Verfahrens werden im folgenden näher beschrieben.

Versuche ergaben, daß der als Holzkleber bekannte Glutinleim (Hasenhautleim), der von Restauratoren auch als Mittel um bei Verklebungen die Gesteinoberfläche zu schützen, eingesetzt wird, der gesuchten Lösung am nächsten kam. Glutinleim bzw. Hasenhautleim wird aus Tierhäuten gewonnen und ist handelsüblich als Granulat erhältlich. Vor seiner Verwendung ist das Granulat in Wasser bei leichter Temperierung aufzulösen. Anschließend kann der Leim mit einem Pinsel aufgetraghen werden.

Überraschend stellte sich dann heraus, daß der oben beschriebene Glutinleimansatz dann ein optimales Ergebnis bringt, wenn er nicht mit einem Pinsel, sondern mit einer Spritzpistole aufgetragen wird. Die Ursache dafür ist in den Lufteinschlüssen zu sehen, die beim Aufspritzen auf das Objekt entstehen. Dazu ist es erforderlich, daß man dem Glutinleim eine spritzfähige Konsistenz verleit. Versuche ergaben, daß ein Ansatz aus zwei Teilen Granulat mit 7 Teilen Wasser, 1 Stunde bei 50 Grad Celsius gerührt, die gewünschte Konsistenz ergibt.

Der spritztechnische Auftrag des Leims auf die Objekte bringt außerdem den Vorteil, daß die Schichtdicke sehr genau bestimmt werden kann, wodurch die unterschiedlichen Permeabilitäten am Objekt ausgeglichen werden können.

## Patentansprüche

1. Verfahren zum Tränken, insbesondere vollständigen Tränken, poröser Körper mit einer aushärtbaren Flüssigkeit, insbesondere Methylmetharcrylat,
**dadurch gekennzeichnet,** daß nach dem Tränken und vor dem Polymerisieren auf die Oberfläche des Körpers ein Glutinleim aufgebracht wird, der nach der Aushärtung der Tränkflüssigkeit entfernt wird.

2. Verfahren nach Anspruch 1, **dadurch gekennzeichnet,** daß der Glutinleim in eine spritzfähige Konsistenz gebracht und aufgespritzt oder aufgesprüht wird.

3. Verfahren nach Anspruch 2, **dadurch gekennzeichnet,** daß zum Herstellen einer spritzfähigen Konsistenz 1 Teil Glutinleimgranulat in 3 bis 4 Teile Wasser aufgelöst wird.

4. Verfahren nach Anspruch 3, **dadurch gekennzeichnet,** daß zum vollständigen Auflösen das Glutinleimgranulat ca. 1 Stunde in ca. 50 Grad Celsius warmes Wasser gerührt wird.

## Claims

1. A process for impregnating, in particular completely impregnating porous bodies with a hardenable liquid, in particular methyl methacrylate, characterized in that after the impregnation and before the polymerization a glutine glue is applied to the surface of the body which is removed following the hardening of the impregnating liquid.

2. A process according to claim 1,
characterized in that the glutine glue is brought into a sprayable form and is splashed or sprayed on.

3. A process according to claim 2,
characterized in that for the preparation of a sprayable consistence 1 part glutine glue granulate is dissolved in 3 to 4 parts water.

4. A process according to claim 3,
characterized in that for complete dissolution the glutine glue granulate is stirred for approximately 1 hour in water at a temperature of about 50°C.

## Revendications

1. Procédé pour imprégner des corps poreux, en particulier pour une imprégnation complète, avec un liquide durcissable, en particulier du méthacrylate de méthyle, caractérisé en ce que après l'imprégnation et avant la polymérisation, la surface du corps est revêtu d'une colle animale, qui est enlevée après le durcissement du liquide d'imprégnation.

2. Procédé selon la revendication 1, caractérisé en ce que la colle animale est amenée à une consistance pulvérisable et est appliquée par pulvérisation ou par aspersion.

3. Procédé selon la revendication 2 caractérisé en ce que pour l'obtention d'une consistance pulvérisable on met en solution 1 partie de granules de colle animale dans 3 à 4 parties d'eau.

4. Procédé selon la revendication 3, caractérisé en ce que, pour la mise en solution complète les granules de colle animale sont agitées pendant une heure dans de l'eau chaude à environ 50 ° Celsius.
